# DEMANDE DE BREVET EUROPEEN

(11) **EP 2 918 335 A1**
(43) Date de publication de la demande: **16.09.2015**
(21) Numéro de dépôt: 15305320.2
(22) Date de dépôt: 03.03.2015
(51) Int. Cl.: B01J 19/32, B01J 19/30

(54) **Contacteur pour colonne d'echange constitue de compartiments de garnissage vrac**

(30) Priorité: 10.03.2014 FR 1451925
(71) Demandeur: IFP Energies nouvelles, 92852 Rueil-Malmaison Cedex (FR)
(72) Inventeur: Haroun, Yacine, 69520 GRIGNY (FR); Alix, Pascal, 38150 ROUSSILLON (FR)

(57) **Abrégé**

L'invention concerne un contacteur (3) qui comporte un agencement de garnissage vrac (A) dans plusieurs compartiments. Les compartiments peuvent être délimités par des plaques perforées (P) ou par parois en garnissage structuré.

L'invention concerne aussi une colonne d'échange de chaleur, une structure flottante et l'utilisation d'une colonne équipé d'un tel contacteur.

## Description

La présente invention concerne le domaine des colonnes de contact gaz/liquide offshore, et plus particulièrement les unités offshore de traitement de gaz, de captage du CO2, de déshydratation ou encore de distillation.

Les unités offshores de traitement de gaz et/ou de captage du CO2 par lavage aux amines comprennent des colonnes d'absorption et de régénération de fluides, liquide ou gazeux. Ces dernières fonctionnent en écoulement gaz/liquide à contre-courant où à co-courant et sont installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, sont installées également des colonnes de distillation ou des colonnes de déshydratation.

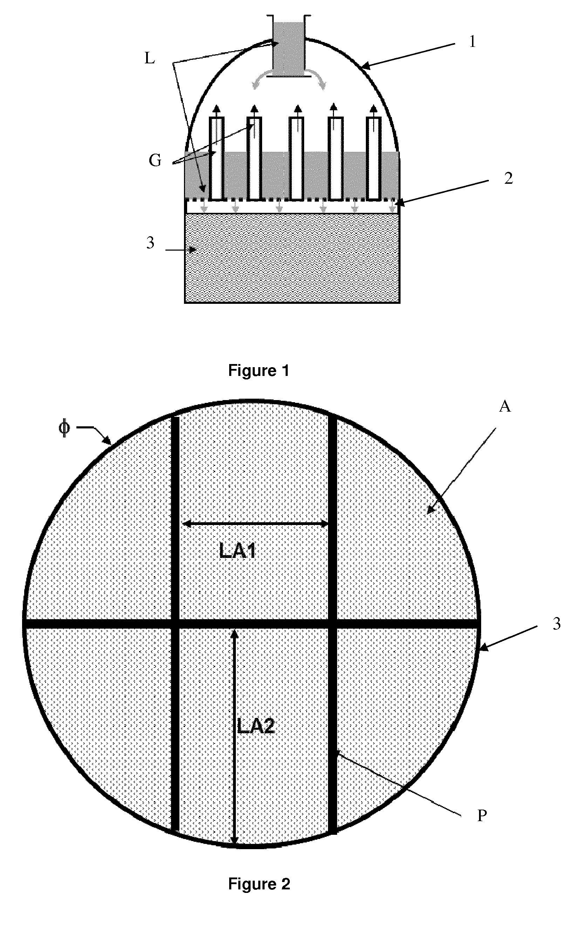

Les colonnes utilisées dans ces unités offshores de traitement de gaz et/ou de capture de CO2 et/ou de distillation et/ou de déshydratation fonctionnent généralement sur le principe d'un échange de matière et/ou de chaleur entre le gaz et le fluide qui circulent dans les colonnes. Les colonnes de mise en contact sont généralement constituées d'une enceinte cylindrique munie d'éléments de mise en contact internes favorisant l'échange entre les fluides. Les éléments de mise en contact (contacteur) qui augmentent la surface de contact peuvent être des garnissages structurés, des garnissages vrac ou des plateaux. La figure 1 représente un cas particulier d'une colonne de traitement de gaz 1 équipée d'un plateau distributeur en tête de colonne. Pour cet exemple, le gaz (G) et le liquide (L) circulent à contre-courant. Classiquement, cette colonne de traitement de gaz 1 comporte plusieurs sections 3 remplies par un contacteur, un plateau distributeur 2 est disposé au-dessus de chaque contacteur 3. Le contacteur gaz/liquide met en contact le gaz G et le liquide L afin de permettre les échanges.

Les colonnes de contact gaz/liquide considérées sont placées sur des structures flottantes, par exemple, de type bateau, plateforme ou encore barge, sensibles à la houle. De ce fait, les équipements installés sur ces unités et notamment les plateaux distributeurs gaz/liquide et les contacteurs subissent des mouvements de houle avec jusqu'à six degrés de liberté ("lacet, tangage, roulis, pilonnement, balancement, poussée").

A titre indicatif, l'angle associé à la combinaison des oscillations de tangage et de roulis est de l'ordre de +/- 5° avec une période allant de 10 à 20 s. Les ordres de grandeur des accélérations longitudinale, transversale et verticale rencontrées dans la colonne varient respectivement entre 0,24/0,76/0,25 m/s² à 6 m au-dessus du pont sur lequel est disposée la colonne et 0,33/1,28/0,33 m/s² à 50 m au-dessus du pont. Dans ces conditions, le fonctionnement des colonnes de contact classiques peut être fortement perturbé. En effet, sous l'effet de la houle, l'inclinaison de la colonne, dégrade l'homogénéité de la distribution des phases dans la section de la colonne.

Cette mal-distribution dans le lit de garnissage, si elle n'est pas maitrisée, peut dégrader de manière importante les performances de la colonne de contact. Afin d'éviter ce type de problèmes, différents empilements adaptés de garnissages structurés ont été développés.

Par exemple, la demande de brevet US5486318 présente des modes de réalisations de contacteurs avec un fractionnement de la section du garnissage. Dans un premier mode de réalisation, la section du garnissage est fractionnée par des parois perforées. La colonne est ainsi composée de plusieurs compartiments équipés de garnissages structurés. Dans un second mode de réalisation, chaque section de garnissage est adjacente perpendiculairement à l'autre section, ainsi la section totale de la colonne est composée d'une multitude de sections de garnissage structuré.

De plus, la demande de brevet US5984282 présente un mode de réalisation d'un contacteur selon lequel dans la direction axiale de la colonne, les éléments de garnissages structurés sont arrangés de manière à ce que chaque rassemblement de section de garnissage entoure un corps central de section de garnissage. Cependant, cette mise en oeuvre est complexe.

Par ailleurs, les demandes de brevet US7559539 et US7559540 présentent des modes de réalisation de contacteurs selon lesquels, le lit de garnissage est composé de deux type de garnissages avec des aires géométriques différentes. La superposition des lits de garnissages de différentes aires peut se faire dans la direction axiale de la colonne comme la direction radiale selon le brevet. Dans les demandes de brevets US7559539, US7559540, la section de la colonne n'est pas découpée en plusieurs sections de garnissage, de ce fait, sous l'effet du mouvement tridimensionnel de la houle, les modes de réalisation ne permettent pas d'éviter le déplacement du liquide latéralement dans toutes les directions. Par conséquent, ces modes de réalisation ne permettent pas d'assurer une bonne distribution des phases liquide et vapeur en milieu offshore.

Ces solutions sont généralement réalisées au moyen de garnissages structurés qui présentent l'avantage d'être moins sensibles au milieu marin que les garnissages vrac. Or les garnissages vrac offrent également des qualités intéressantes en termes d'efficacité de transfert, faible perte de charge et simplicité d'installation.

La présente invention permet de palier à l'inconvénient d'utilisation des garnissages vrac en colonne de contact offshore. Le contacteur selon l'invention comporte un agencement de garnissage vrac dans plusieurs compartiments, ce qui permet d'assurer une bonne homogénéité de distribution dans la colonne de contact et ainsi profiter des avantages du garnissage vrac en milieu marin. Les compartiments sont délimités par des parois, formées de plaques perforées ou par du garnissage structuré. L'invention permet alors d'assurer le bon fonctionnement de la colonne, notamment en cas d'inclinaison de la colonne, quelle que soit la direction de l'inclinaison de la colonne.

### Le dispositif selon l'invention

L'invention concerne un contacteur pour colonne d'échange de chaleur et/ou de matière entre deux fluides, ledit contacteur comprenant un garnissage vrac. Ledit garnissage vrac est réparti dans plusieurs compartiments délimités par au moins une paroi.

Selon l'invention, lesdits compartiments sont sensiblement parallélépipédiques, cylindriques, prismatiques et/ou ont une forme de portions de cylindre.

Avantageusement, au moins une paroi est constituée par du garnissage structuré.

De préférence, la surface géométrique spécifique dudit garnissage structuré est comprise entre 125 et 750 m²/m³, et vaut de préférence sensiblement 250 m²/m³.

De plus, au moins une paroi peut être une plaque perforée.

Selon un mode de réalisation de l'invention, lesdits compartiments étant sensiblement parallélépipédiques, lesdites parois forment, dans un plan horizontal, sensiblement des bandes perpendiculaires.

Alternativement, lesdits compartiments étant sensiblement cylindriques, lesdites parois forment, dans un plan horizontal, sensiblement des cercles concentriques.

De manière avantageuse, la périphérie dudit contacteur est formée par une paroi de garnissage structuré.

En outre, l'invention concerne une colonne d'échange de chaleur et/ou de matière entre un gaz et un liquide, dans laquelle les deux fluides sont mis en contact au moyen d'au moins un contacteur selon l'invention.

L'invention concerne également une structure flottante, notamment pour la récupération d'hydrocarbures. Elle comprend au moins une colonne d'échange de chaleur et/ou de matière entre un gaz et un liquide selon l'invention.

De plus, l'invention concerne l'utilisation d'une colonne selon l'invention pour un procédé de traitement de gaz, de captage de CO₂, de distillation ou de transformation d'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre le cas particulier d'une colonne de traitement de gaz ou de capture de CO₂ équipée d'un plateau distributeur en tête de colonne.
Les figures 2 à 4 illustrent différentes variantes de réalisation de l'agencement des compartiments délimités par des plaques perforées, pour un contacteur selon l'invention.
Les figures 5 à 10 illustrent différentes variantes de réalisation de l'agencement des compartiments délimités par du garnissage structuré, pour un contacteur selon l'invention.

### Description détaillée de l'invention

L'invention concerne un contacteur pour colonne d'échange de chaleur et/ou de matière entre deux fluides. Un contacteur est un élément permettant de mettre en contact deux fluides de manière à favoriser les échanges de chaleur et/ou de matière entre les deux fluides. Le contacteur selon l'invention comprend plusieurs compartiments contenant chacun du garnissage vrac.

On appelle garnissage vrac, des empilements anarchiques, aléatoires, d'éléments unitaires possédant des formes particulières, par exemple des anneaux, des spirales... Les échanges de chaleur et/ou de matière se réalisent au sein de ces éléments unitaires. Ces éléments unitaires peuvent être en métal, en céramique, en plastique ou en matériaux analogues. Les demandes de brevet EP 1478457 et WO 2008/067031 décrivent deux exemples d'élément unitaire de garnissage vrac. Le garnissage vrac offre des qualités intéressantes en termes d'efficacité de transfert, faible perte de charge et simplicité d'installation.

Selon l'invention, le contacteur comprend une pluralité de compartiments contenant chacun du garnissage vrac. Le principe de base de l'invention est de découper le lit de garnissage vrac selon la direction axiale de la colonne en plusieurs compartiments de garnissage vrac. Les compartiments sont délimités par des parois, formées de plaques perforées et/ou formées de garnissage structurés. Le fractionnement de la section du garnissage vrac en plusieurs lits (compartiments) délimités par une paroi (plaque perforée et/ou garnissage structuré) permet d'éviter le déplacement massif du liquide latéralement ou la formation de passage préférentiel du liquide dans le garnissage, sous l'effet de l'inclinaison de la colonne, notamment par un mouvement lié à la houle. En effet, la paroi (plaque perforée et/ou garnissage structuré) permet d'atténuer/freiner l'inertie et le déplacement latéral des phases liquide et vapeurs et assure ainsi une bonne homogénéité et uniformité de distribution des phases dans lit de garnissage. De plus, l'inclinaison de la colonne pouvant entraîner également un déplacement du garnissage vrac, les compartiments permettent de limiter le déplacement du garnissage vrac.

Avantageusement, les compartiments sont sensiblement parallélépipédiques, cylindriques, prismatiques ou ont une forme de portion de cylindre. De manière avantageuse, chaque compartiment est entouré par une paroi (plaque perforée, et/ou garnissage structuré). Lorsque un compartiment est situé en périphérie du contacteur, il est entouré par une plaque perforée et/ou par une paroi formée de garnissage structuré et par la colonne (la virole de la colonne). L'agencement du contacteur sous forme de compartiments permet d'atténuer/freiner l'inertie et le déplacement des fluides dans toutes les directions.

Selon un premier mode de réalisation, les compartiments sont délimités uniquement par des plaques perforées. Pour ce mode de réalisation avec des sections de garnissage vrac délimitées par une plaque perforée, les perforations permettent d'équilibrer la pression de part et d'autre la paroi et ainsi entre les différents compartiments. Les plaques perforées sont réalisées par exemple en métal.

Les figures 2 à 4 présentent différentes variantes de réalisation du premier mode de réalisation de l'invention (avec des plaques perforées). Ces figures correspondent à des vues dans le plan horizontal de l'agencement des garnissages structurés. Sur ces figures, le garnissage vrac est noté A, et les plaques perforées sont notées P.

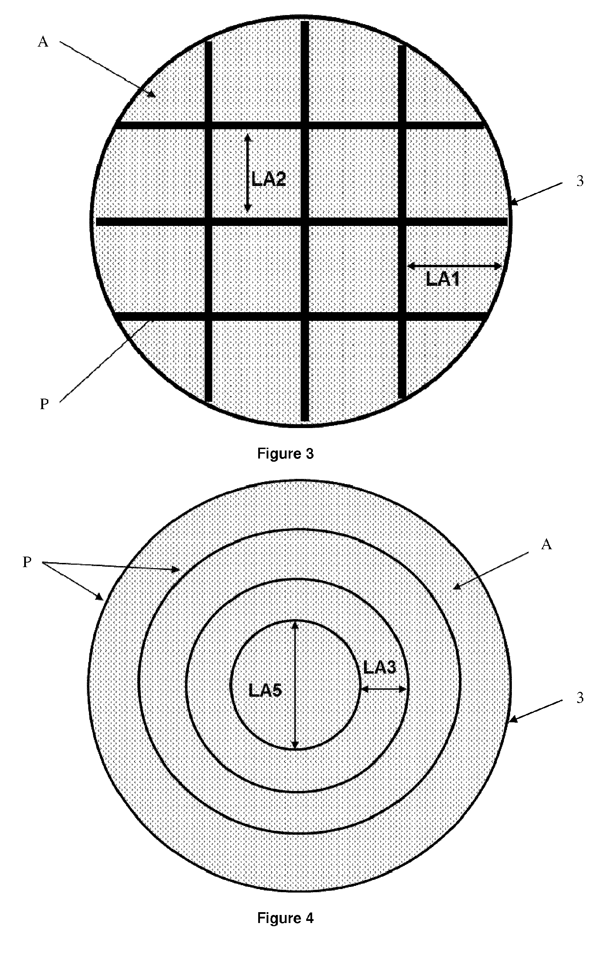

Pour les variantes de réalisation des figures 2 et 3, les compartiments sont sensiblement parallélépipédiques. Telles qu'illustrées, les plaques perforées sont disposées selon deux directions dans le plan horizontal. Ces deux directions sont sensiblement perpendiculaires l'une par rapport à l'autre. Pour ces variantes de réalisation, chaque compartiment du garnissage vrac A est entouré par des plaques perforées et le cas échéant par le contour de la colonne φ. L'exemple de la figure 3 comporte plus de blocs que l'exemple de la figure 2, par conséquent cette variante de réalisation est plus adaptée pour les colonnes de diamètre important, ou pour les colonnes soumises à des inclinaisons plus importantes. Selon un aspect de ces variantes de réalisation, le diamètre de la colonne φ est compris entre 0,5 et 10 m, les dimensions des compartiments du garnissage vrac A : LA1 et LA2 sont comprises entre 0,2 et 5 m.

Pour la variante de réalisation de la figure 4, les compartiments sont sensiblement cylindriques. Telles qu'illustrées, les plaques perforées forment des cercles concentriques dans le plan horizontal. L'espacement entre deux parois consécutives peut être sensiblement identique. Pour cette variante de réalisation, chaque compartiment du garnissage vrac A, formant sensiblement une couronne, est entouré par des plaques perforées et le cas échéant par le contour de la colonne φ. Selon un aspect de cette variante de réalisation, le diamètre de la colonne φ est compris entre 0,5 et 10m, les dimensions des compartiments du garnissage vrac A : LA3 est compris entre 0,2 et 5 m et LA5 est comprise entre 0,1 et 2,5 m.

Selon un deuxième mode de réalisation de l'invention, les compartiments sont délimités par des parois en garnissage structuré. Cette configuration permet d'allier les avantages propre à chaque garnissage : vrac et structuré et assurer une bonne homogénéité et uniformité de la distribution dans la colonne d'échange de chaleur et/ou de matière.

On appelle garnissage structuré, un empilement de plaques ou de feuilles pliées, corruguées (de l'anglais « corrugated » c'est-à-dire sensiblement ondulé avec des angles droits), et arrangées de manière organisée sous forme de grand blocs comme décrit notamment dans les demandes de brevet FR 2913353 (US 2010/0213625), US 3,679,537, US 4,296,050. Les plaques constituant le garnissage structuré comportent, dans le plan transversal, une direction principale. La direction principale est donc une direction perpendiculaire à l'axe vertical, définie par la structure des plaques. Les garnissages structurés ont l'avantage d'offrir une grande aire géométrique pour un diamètre représentatif donné.

Selon l'invention, un contacteur comprenant du garnissage structuré comprend plusieurs couches de garnissage structuré empilées les unes au-dessus des autres. Afin d'assurer les échanges entre les fluides, les couches du contacteur ont des directions principales différentes, de préférence elles sont sensiblement perpendiculaires les unes par rapport aux autres. La hauteur des couches peuvent être comprises entre 0,1 et 0,3 m et peut valoir préférentiellement 0,21 m.

La surface géométrique spécifique d'un garnissage structuré correspond à l'aire totale développée par le garnissage, cette surface est exprimée en tant que surface géométrique du garnissage disponible par unité de volume. Classiquement, les garnissages structurés peuvent développer des surfaces géométriques spécifiques allant de 100 à 750 m²/m³. Du fait de leur organisation géométrique, les garnissages structurés développent des surfaces spécifiques supérieures à celles des garnissages vrac, pour une même capacité hydraulique. Pour ce mode de réalisation de l'invention, la surface géométrique spécifique du garnissage structuré est comprise entre 125 et 750 m²/m³, et vaut de préférence 250 m²/m³.

Du fait que le garnissage structuré possède une surface spécifique supérieure à celle du garnissage vrac, les parois en garnissage structuré compartimentant le garnissage vrac vont atténuer/freiner l'inertie et le déplacement latéral des phases liquide et vapeurs et assurer ainsi une bonne homogénéité et uniformité de distribution des phases dans lit de garnissage.

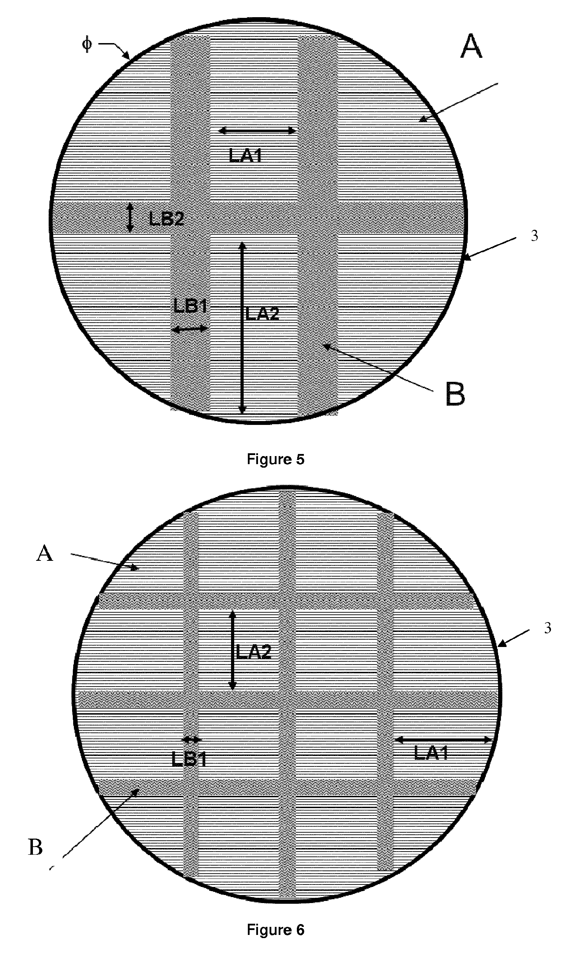

Les figures 5 à 10 présentent différentes variantes de réalisation du deuxième mode de réalisation de l'invention (avec des parois en garnissage structuré). Ces figures correspondent à des vues dans le plan horizontal de l'agencement des garnissages structurés. Sur ces figures, le garnissage vrac est noté A, et le garnissage structuré est noté B.

Pour les variantes de réalisation des figures 5 et 6, les compartiments sont sensiblement parallélépipédiques. De plus, les parois formées par le garnissage structuré B ont sensiblement des formes de bande (c'est-à-dire avec une largeur très inférieure à la longueur dans le plan horizontal). Telles qu'illustrées, les bandes sont disposées selon deux directions dans le plan horizontal. Ces deux directions sont sensiblement perpendiculaires l'une par rapport à l'autre. Pour ces variantes de réalisation, chaque compartiment de garnissage vrac A est entouré par des bandes du garnissage structuré B et le cas échéant par le contour de la colonne φ. L'exemple de la figure 6 comporte plus de blocs que l'exemple de la figure 5, par conséquent cette variante de réalisation est plus adaptée pour les colonnes de diamètre important, ou pour les colonnes soumises à des inclinaisons plus importantes. Selon un aspect de ces variantes de réalisation, le diamètre de la colonne φ est compris entre 0,5 et 10 m, les dimensions des compartiments du garnissage vrac A : LA1 et LA2 sont comprises entre 0,2 et 5 m et les dimensions des bandes du garnissage structuré B : LB1 et LB2 sont comprises entre 0,1 et 2,5 m. Par exemple, pour le mode de réalisation de la figure 6, les dimensions peuvent être choisies de la manière suivante : le diamètre de la colonne φ vaut 4 m, les dimensions des compartiments du garnissage vrac A : LA1 et LA2 valent 0,75 m et les dimensions des bandes du garnissage structuré B : LB1 et LB2 valent 0,2 m.

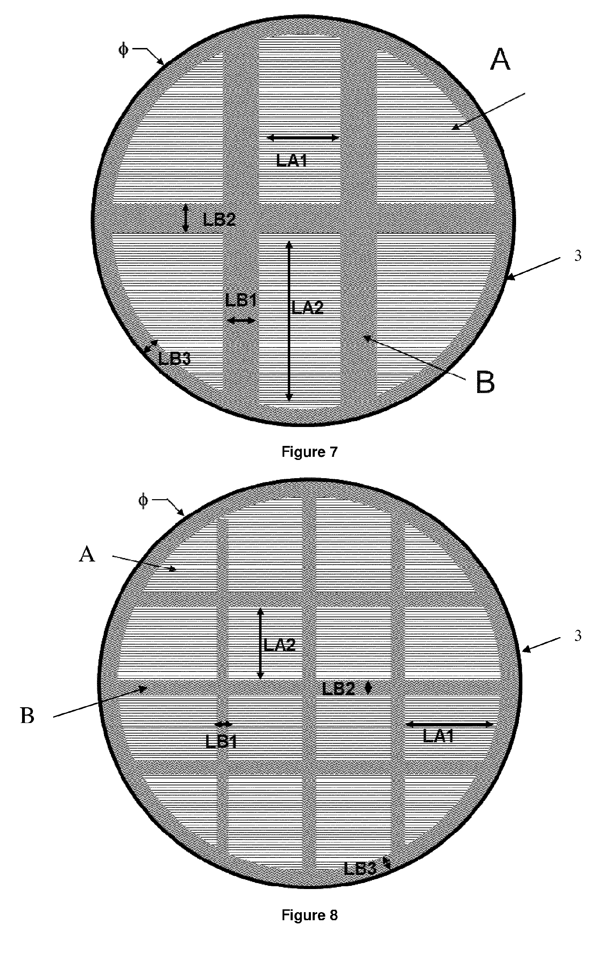

Les variantes de réalisation des figures 7 et 8 correspondent aux variantes de réalisation des figures 5 et 6 pour lesquels la périphérie du contacteur est constituée par le garnissage structuré B. L'agencement d'un bloc du deuxième garnissage structuré en périphérie permet notamment d'éviter l'accumulation du liquide sur la paroi de la colonne. Les parois constituées par le garnissage structuré B ont sensiblement des formes de bande. Telles qu'illustrées, les bandes sont disposées selon deux directions dans le plan horizontal. Ces deux directions sont sensiblement perpendiculaires l'une par rapport à l'autre. Pour ces variantes de réalisation, chaque compartiment du garnissage vrac A est entouré uniquement par des parois en garnissage structuré B. L'exemple de la figure 8 comporte plus de blocs que l'exemple de la figure 7, par conséquent cette variante de réalisation est plus adaptée pour les colonnes de diamètre important, ou pour les colonnes soumises à des inclinaisons plus importantes. Par exemple, le diamètre de la colonne φ est compris entre 0,5 et 10 m, les dimensions des compartiments du garnissage vrac A : LA1 et LA2 sont comprises entre 0,2 et 5 m, les dimensions des bandes du garnissage structuré B : LB1 et LB2 sont comprises entre 0,1 et 2,5 m, et la dimension de la paroi périphérique LB3 est comprise entre 0,1 et 2,5 m.

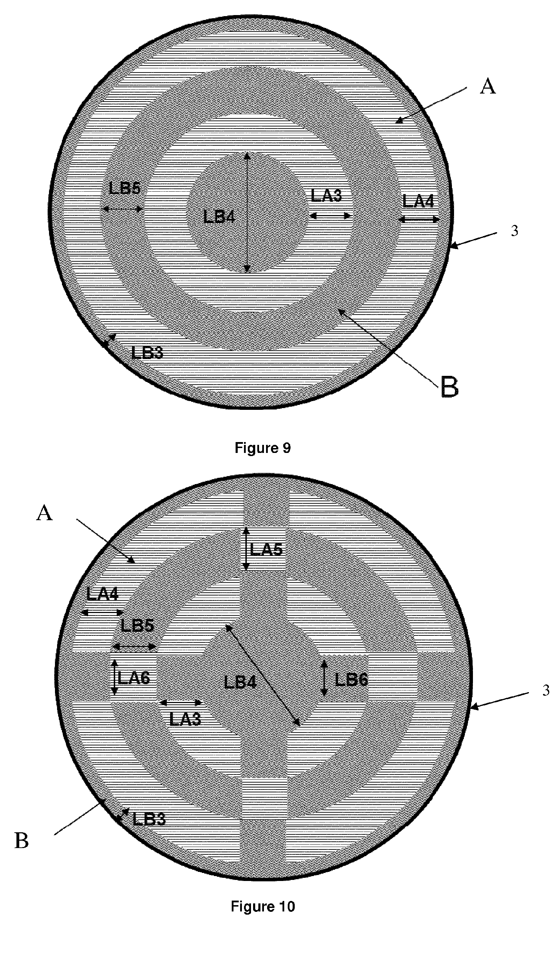

Pour la variante de réalisation de la figure 9, les compartiments sont sensiblement cylindriques (tubulaires) dans le plan horizontal : l'agencement des garnissages vrac et structuré forme un ensemble de cercles concentriques alternant des compartiments de garnissages vrac A et des parois de garnissage structuré B. Pour cette variante de réalisation, le centre du contacteur est formé de garnissage structuré B et le contacteur comporte une paroi périphérique constituée par le garnissage structuré B. Chaque compartiment du garnissage vrac A est donc entouré par du garnissage structuré B. Par exemple, le diamètre de la colonne φ est compris entre 0,5 et 10 m, les dimensions des compartiments du garnissage vrac A : LA3 et LA4 sont comprises entre 0,2 et 2,5 m, les dimensions des parois du garnissage structuré B : LB4 est comprise entre 0,2 et 1 m, et LB5 et LB6 sont comprises entre 0,1 et 2,5 m et la dimension du bloc périphérique LB3 est comprise entre 0,1 et 2,5 m.

Pour la variante de réalisation de la figure 10, la majorité des compartiments de garnissage vrac et des parois formées de garnissage structuré sont sensiblement cylindriques (tubulaires) ou une forme de portion de cylindre (ou de tube), et une minorité des compartiments et des parois sont sensiblement rectangulaires dans le plan horizontal. L'agencement des garnissages vrac et structuré forme un ensemble de portions de cercles (par exemple sensiblement des quarts de cercle) concentriques alternant les garnissages vrac A et structuré B. De plus, l'agencement comprend quelques rectangles. Cet agencement forme une alternance des garnissages A et B. Pour cette variante de réalisation, le centre du contacteur est formé de garnissage structuré B et le contacteur comporte une paroi périphérique constituée par le garnissage structuré B. Chaque compartiment du garnissage vrac A est donc entouré par des parois de garnissage structuré B. L'exemple de la figure 10 comporte plus de compartiments que l'exemple de la figure 9, par conséquent cette variante de réalisation est plus adaptée pour les colonnes de diamètre important, ou pour les colonnes soumises à des inclinaisons plus importantes. Par exemple, le diamètre de la colonne φ est compris entre 0,5 et 10 m, les dimensions des compartiments du garnissage vrac A : LA3, LA4, LA6 sont comprises entre 0,2 et 2,5 m, les dimensions des parois de garnissage structuré B : LB4 est comprise entre 0,2 et 1 m, et LB5 et LB6 sont comprises entre 0,1 et 2,5 m et la dimension de la paroi périphérique LB3 est comprise entre 0,1 et 2,5 m.

Ces modes de réalisation permettent de proposer un agencement simple, permettant notamment de simplifier la mise en place, en pratique, des éléments de garnissage dans la colonne de contact tout en assurant une distribution homogène des fluides.

De plus, d'autres modes de réalisations peuvent être envisagés, par exemple en définissant des blocs sensiblement triangulaires au moyen de parois et/ou de bandes du garnissage B orientées à 45° les unes par rapport aux autres, ou en reprenant l'agencement des figures 9 et 10 en retirant la paroi périphérique du garnissage structurés, ou en combinant l'utilisation de plaques perforées et de garnissage structuré pour délimiter les compartiments...

L'invention concerne également une colonne 1 d'échange de matière et/ou de chaleur entre deux fluides, dans laquelle deux fluides sont mis en contact au moyen d'au moins un contacteur gaz/liquide 3, la colonne 1 comprenant au moins une première entrée d'un fluide liquide, au moins une deuxième entrée d'un fluide gazeux, au moins une première sortie d'un fluide gazeux et au moins une deuxième sortie d'un fluide liquide. Selon l'invention, le contacteur est tel que décrit ci-dessus. De plus, la colonne 1 peut comporter au moins un plateau distributeur 2, pour permettre la distribution des fluides sur le contacteur 3.

Le gaz et le liquide peuvent s'écouler dans la colonne à contre-courant ou à co-courant.

En outre, l'invention concerne une structure flottante telle qu'une plateforme, un bateau, une barge flottante par exemple du type FPSO ou FNLG, notamment pour la récupération d'hydrocarbures. La structure flottante comporte au moins une unité de traitement des hydrocarbures comprenant au moins une colonne d'échange de matière et/ou de chaleur selon l'invention.

La colonne selon l'invention peut être utilisée dans des procédés de traitement de gaz, de captage de CO2 (par exemple par lavage aux amines), de distillation ou de transformation de l'air.

De plus, l'invention peut être utilisée avec tout type de solvant.

## Revendications

1. Contacteur pour colonne d'échange de chaleur et/ou de matière entre deux fluides, ledit contacteur (3) comprenant un garnissage vrac (A), **caractérisé en ce que** ledit garnissage vrac (A) est réparti dans plusieurs compartiments délimités par au moins une paroi.

2. Contacteur selon la revendication 1, dans lequel lesdits compartiments sont sensiblement parallélépipédiques, cylindriques, prismatiques et/ou ont une forme de portions de cylindre.

3. Contacteur selon l'une des revendications précédentes, dans lequel au moins une paroi est constituée par du garnissage structuré (B).

4. Contacteur selon la revendication 3, dans lequel la surface géométrique spécifique dudit garnissage structuré (B) est comprise entre 125 et 750 m²/m³, et vaut de préférence sensiblement 250 m²/m³.

5. Contacteur selon l'une des revendications précédentes, dans lequel au moins une paroi est une plaque perforée.

6. Contacteur selon l'une des revendications précédentes, dans lequel lesdits compartiments étant sensiblement parallélépipédiques, lesdites parois forment, dans un plan horizontal, sensiblement des bandes perpendiculaires.

7. Contacteur selon l'une des revendications précédentes, dans lequel lesdits compartiments étant sensiblement cylindriques, lesdites parois forment, dans un plan horizontal, sensiblement des cercles concentriques.

8. Contacteur selon l'une des revendications précédentes, dans lequel la périphérie dudit contacteur (3) est formée par une paroi de garnissage structuré (B).

9. Colonne d'échange de chaleur et/ou de matière entre un gaz et un liquide, dans laquelle les deux fluides sont mis en contact au moyen d'au moins un contacteur (3) selon l'une des revendications précédentes.

10. Structure flottante, notamment pour la récupération d'hydrocarbures, **caractérisée en ce qu'**elle comprend au moins une colonne (1) d'échange de chaleur et/ou de matière entre un gaz et un liquide selon la revendication 9.

11. Utilisation d'une colonne selon la revendication 9 pour un procédé de traitement de gaz, de captage de CO₂, de distillation ou de transformation d'air.
